# EUROPEAN PATENT APPLICATION

(11) **EP 4 489 153 A1**
(43) Date of publication of application: **08.01.2025**
(21) Application number: 22934091.4
(22) Date of filing: 30.03.2022
(51) Int. Cl.: H01M 10/04, H01M 50/183

(54) **BATTERY AND ELECTRIC DEVICE**

(71) Applicant: Dongguan Amperex Technology Limited, Dongguan, Guangdong 523808 (CN)
(72) Inventor: DONG, Yuyang, Dongguan, Guangdong 523808 (CN); YAN, Dongyang, Dongguan, Guangdong 523808 (CN); ZENG, Qiao, Dongguan, Guangdong 523808 (CN)
(74) Representative: Klunker IP Patentanwälte PartG mbB
(86) International application number: PCT/CN2022/084081
(87) International publication number: WO 2023/184239

(57) **Abstract**

A battery and an electric device are provided. The battery includes an electrode assembly, a first housing, a second housing, and a first adhesive layer. The first housing is connected to the second housing, an accommodating space is formed between the first housing and the second housing, the electrode assembly is disposed in the accommodating space, the first housing includes a first truncated cone section and a second truncated cone section, and the second truncated cone section is disposed in the second housing. The first adhesive layer is located between the first housing and the second housing, the first adhesive layer includes a first section, a second section, and a third section, a boundary point between the first section and the second section is at a position from the bottom of the first adhesive layer to a distance of 1/4H from a second end surface of the battery, and a boundary point between the second section and the third section is at a position at which an end of the second housing close to the first end surface is located. Thickness of the first section, thickness of the second section, and thickness of the third section are all different. The first adhesive layer fills a gap between the first housing and the second housing, enhancing sealing performance of the battery.

## Description

### TECHNICAL FIELD

This application relates to the field of electrochemical apparatus technologies, and in particular, to a battery and an electric device.

### BACKGROUND

Due to the advantages such as being rechargeable and reusable, secondary batteries such as button cells are widely used in various electric devices, for example, in portable electric devices. In the related art, a secondary battery typically includes a housing and an electrode assembly disposed inside the housing. When the secondary battery is placed in a humid environment, moisture may enter the housing and in turn enter the electrode assembly, which may cause damage to the electrode assembly or shorten service life of the electrode assembly, thereby potentially affecting product performance of the battery.

### SUMMARY

Embodiments of this application are intended to provide a battery and an electric device, so as to enhance sealing performance of the battery and improve product performance of the battery. Specific technical solutions are as follows.

Some embodiments of this application provide a battery. The battery includes an electrode assembly; a first housing and a second housing, where the first housing is connected to the second housing, an accommodating space is formed between the first housing and the second housing, the electrode assembly is disposed in the accommodating space, the first housing includes a first truncated cone section and a second truncated cone section, and the second truncated cone section is disposed in the second housing; and a first adhesive layer, where the first adhesive layer is located between the first housing and the second housing, the first adhesive layer includes a first section, a second section, and a third section connected in sequence, a boundary point between the first section and the second section is at a position from the bottom of the first adhesive layer to a distance of 1/4H from a second end surface of the battery, where H is a distance between a first end surface and the second end surface of the battery, and a boundary point between the second section and the third section is at a position at which an end of the second housing close to the first end surface is located; where thickness of the first section, thickness of the second section, and thickness of the third section are all different.

According to the battery provided in some embodiments of this application, the first adhesive layer is disposed between the first housing and the second housing to reduce the probability of electrical connection between the first housing and the second housing. The second truncated cone section of the first housing is disposed in the second housing to relatively fix the first housing and the second housing. The first layer includes the first section, the second section, and the third section, and the first section, the second section, and the third section are disposed at different joints between the first housing and the second housing respectively. The thicknesses of the first section, the second section, and the third section are not equal. Thus, the first adhesive layer fills the gap between the first housing and the second housing as much as possible, which can reduce the probability of external moisture and the like penetrating the accommodating space to cause damage to the electrode assembly, thereby enhancing sealing performance of the battery and in turn improving service life and product performance of the battery.

In some embodiments, a radius of a bottom end surface of the second truncated cone section is R1, a radius of the second housing is R2, a wall thickness of the second truncated cone section in a radial direction of the first truncated cone section is T1, the second housing is cylindrical, the thickness of the first section is T2, the thickness of the second section is T3, and the thickness of the third section is T4, where T3 > (T2 + T4)/2 and T4 ≥ (R2 - R1 - T1) . The thickness T3 of the second section is greater than an average of the thickness T2 of the first section and the thickness T3 of the second section, meaning that the second section is thicker. Because the position of the second section is the main stress-bearing position between the first housing and the second housing after the first housing and the second housing are connected, increasing the thickness of the second section can reduce deformation rate of the second section, further enhancing sealing performance of the joint between the first housing and the second housing, thereby further enhancing the sealing performance of the battery and the product performance of the battery.

In some embodiments, the first adhesive layer further includes a fourth section, at least a portion of the fourth section enclosing an edge of the second truncated cone section and extending into the accommodating space. Thus, the fourth section can be used to connect a bottom edge of the second truncated cone section and the second housing, and the fourth section can be further used to enhance sealing performance between the second truncated cone section and the fourth section, reducing the probability of impurities such as water and oxygen entering the accommodating space via the foregoing gap, thereby enhancing the sealing performance of the battery and the product performance of the battery.

In some embodiments, the fourth section is in contact with a surface of the second housing close to the fourth section. Thus, the fourth section fills the gap between the bottom edge of the second truncated cone section and the second end surface, which reduces the probability of impurities such as water and oxygen entering the accommodating space via the gap between the second truncated cone section and the second end surface to cause corrosion to the electrode assembly, further enhancing the sealing performance and product performance of the battery.

In some embodiments, the radius of the bottom end surface of the second truncated cone section is greater than a radius of a bottom end surface of the first truncated cone section. Thus, the second truncated cone section limits the overall first housing, limiting a distance of upward movement of the first housing along a vertical direction, and reducing the probability of the first housing moving upward and detaching from the second housing, thereby improving stability of the connection between the first housing and the second housing.

In some embodiments, in a radial direction of the first truncated cone section, thickness of the first section falls within a range of 0.08 mm to 0.2 mm. Thus, the first adhesive layer can fill the gap between the first housing and the second housing as much as possible, which can reduce the probability of external moisture and the like penetrating the accommodating space to cause damage to the electrode assembly, thereby enhancing the sealing performance of the battery and in turn improving the service life and product performance of the battery.

In some embodiments, in a radial direction of the first truncated cone section, a radius of the second truncated cone section falls within a range of 4.6 mm to 7 mm; and a radius of the first truncated cone section falls within a range of 4.3 mm to 6.5 mm.

In some embodiments, in a radial direction of the first truncated cone section, a difference between a distance from the first truncated cone section to the second housing and a distance from the second truncated cone section to the second housing falls within a range of 0.2 mm to 0.5 mm.

In some embodiments, in an axial direction of the first truncated cone section, a height difference between the first truncated cone section and the second truncated cone section falls within a range of 3 mm to 4 mm.

In some embodiments, in an axial direction of the first truncated cone section, a length difference between the third section and the first section falls within a range of 2 mm to 4 mm.

In some embodiments, the first adhesive layer covers all surfaces of the first housing and the second housing in contact. Thus, the stability of the connection between the first housing and the second housing can be further improved, and the sealing performance between the first housing and the second housing is further enhanced, thereby further enhancing the sealing performance and product performance of the battery.

In some embodiments, the first housing and the second housing are connected by snap-fitting, or the first housing and the second housing are connected by interlocking, or the first housing and the second housing are connected by screwing. Thus, the connection between the first housing and the second housing has high stability and low complexity.

In some embodiments, the electrode assembly includes a laminated body, the laminated body includes a first conductive layer, a second conductive layer, and a separator layer disposed between the first conductive layer and the second conductive layer, and the electrode assembly further includes a first tab and a second tab, the first tab being connected to the first conductive layer, and the second tab being connected to the second conductive layer. The separator layer can be used to isolate positive and negative electrodes for electronic insulation, and can also be used to ensure that ions in an electrolyte pass through freely to form an electric circuit. The first tab and the second tab are metal conductors that lead the positive and negative electrodes out of the laminated body, which come into contact with the positive and negative electrodes of the battery to charge and discharge the battery.

In some embodiments, the first housing and the second housing are connected to the first tab and the second tab respectively, or the first housing and the second housing are connected to conductors connected to the first tab and the second tab respectively. The first tab and the second tab being in direct contact and connection with the first housing or the second housing can save the internal accommodating space of the battery, reducing volume of the battery.

In some embodiments, a structure of the laminated body is an axial winding structure.

In some embodiments, a structure of the laminated body is a laminated structure in a first direction or a laminated structure in a second direction, the first direction being perpendicular to the second direction.

In some embodiments, a material of the first adhesive layer and a second insulating layer is a polymer, and the polymer is at least one of rubber, plastic, or resin.

Some embodiments of a second aspect of this application provide an electric device, where the electric device includes the battery according to any one of the foregoing embodiments.

In embodiments of this application, the battery is configured to provide electrical energy for the electric device. In the battery included in the electric device, the first adhesive layer is disposed between the first housing and the second housing to reduce the probability of electrical connection between the first housing and the second housing. The second truncated cone section of the first housing is disposed in the second housing to relatively fix the first housing and the second housing. The first adhesive layer includes the first section, the second section, and the third section, where the boundary point between the first section and the second section is at a position from the bottom of the first adhesive layer to a distance of 1/4H from the second end surface of the battery, the boundary point between the second section and the third section is at a position at which the end of the second housing close to the first end surface is located, and the thicknesses of the first section, the second section, and the third section are not equal. Thus, the adhesive layer fills the gap between the first housing and the second housing as much as possible, which can reduce the probability of external moisture and the like penetrating the accommodating space to cause damage to the electrode assembly, thereby enhancing the sealing performance of the battery and in turn improving the service life and product performance of the battery.

### BRIEF DESCRIPTION OF DRAWINGS

To describe the technical solutions in some embodiments of this application and in the prior art more clearly, the following briefly describes the accompanying drawings required for describing some embodiments and the prior art. Apparently, the accompanying drawings in the following description show merely some embodiments of this application.
FIG. 1 is a schematic structural diagram of a battery according to some embodiments of this application;
FIG. 2 is a cross-sectional view of a battery according to some embodiments of this application;
FIG. 3 is an enlarged view of region A in FIG. 2; and
FIG. 4 is a schematic diagram of an electrode assembly according to some embodiments of this application.

### DESCRIPTION OF EMBODIMENTS

To make the objectives, technical solutions, and advantages of this application more comprehensible, the following further describes this application in detail with reference to accompanying drawings and embodiments. Apparently, the described embodiments are merely some but not all of these embodiments of this application. All other embodiments obtained by persons of ordinary skill in the art based on some embodiments of this application shall fall within the protection scope of this application.

The following clearly and in detail describes the technical solutions in some embodiments of this application. Apparently, the described embodiments are merely some but not all of these embodiments of this application. Unless otherwise defined, all technical and scientific terms used herein shall have the same meanings as commonly understood by persons skilled in the art to which this application belongs. The terms used in the specification of this application are for description of specific embodiments only without any intention to limit this application.

The following describes some embodiments of this application in detail. However, this application may be embodied in many different implementations and should not be construed as being limited to the example embodiments set forth herein. Rather, these example embodiments are provided such that this application can be conveyed to persons skilled in the art thoroughly and in detail.

In addition, in the accompanying drawings, sizes or thicknesses of various components and layers may be enlarged for brevity and clarity. Throughout the text, the same numerical values represent the same elements. As used herein, the term "and/or" includes any and all combinations of one or more associated items listed. In addition, it should be understood that when an element A is referred to as being "connected to" an element B, the element A may be directly connected to the element B, or an intervening element C may be present therebetween such that the element A and the element B are indirectly connected to each other.

Further, the use of "may" in the description of some embodiments of this application means "one or more embodiments of this application".

The technical terms used herein are merely intended to describe specific embodiments rather than to limit this application. As used herein, the singular forms are intended to also include the plural forms, unless otherwise clearly stated in the context. It should be further understood that the term "include", when used in this specification, specifies the presence of stated features, numbers, steps, operations, elements, and/or components but does not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that the spatial related terms are intended to include different directions of a device or an apparatus in use or operation in addition to the directions described in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments. In this application, the first direction may be any direction in a plane in which the first surface is located.

Some embodiments of this application are described in detail below. In absence of conflicts, the following embodiments and features in some embodiments may be combined.

To improve service life and product performance of a battery, some embodiments of this application provide a battery and an electric device. The battery is configured to provide electrical energy for the electric device. The battery includes but is not limited to a button cell.

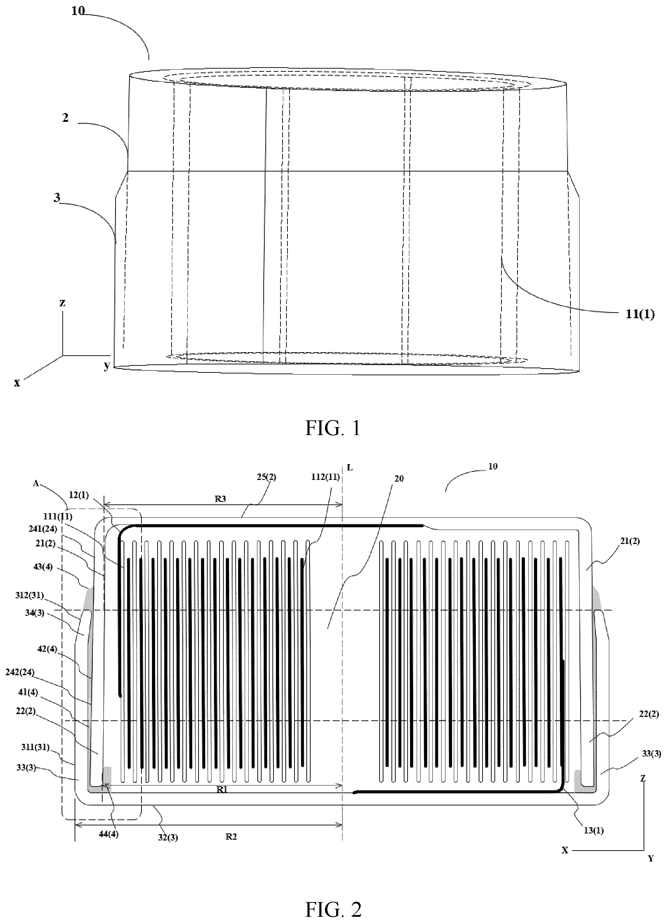

Some embodiments of a first aspect of this application provide a battery 10, as shown in FIG. 1 to FIG. 3, the battery 10 includes an electrode assembly 1, a first housing 2, a second housing 3, and a first adhesive layer 4. The first housing 2 is connected to the second housing 3 via the first adhesive layer 4, an accommodating space 20 is formed between the first housing 2 and the second housing 3, and the electrode assembly 1 is disposed in the accommodating space 20.

The first housing 2 is roughly cylindrical, the first housing 2 is hollow, and the first housing 2 includes a first truncated cone section 21 and a second truncated cone section 22. As shown in FIG. 2, the first housing 2 includes an arc-shaped first side surface 24 and a first end surface 25 connected to the arc-shaped first side surface 24, and a side of the first housing 2 opposite the first end surface 25 also has a first opening.

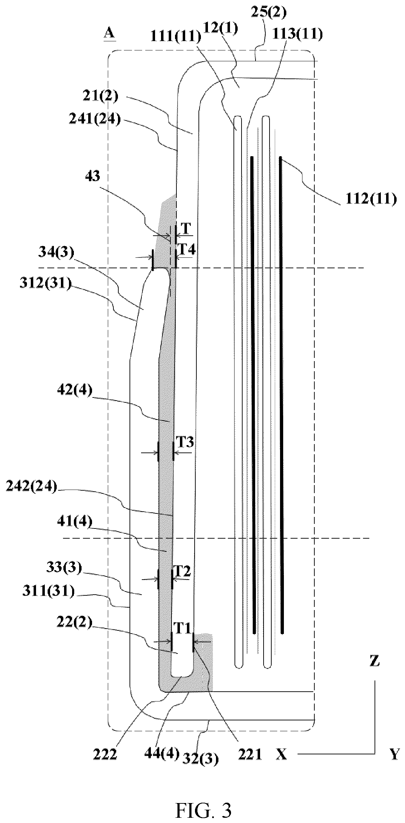

In these embodiments of this application, as shown in FIG. 2 and FIG. 3, an axial direction of the first truncated cone section 21 and the second truncated cone section 22 is defined as a direction z, that is, the axial direction of the first truncated cone section 21 is defined as the direction z, and two directions perpendicular to the direction z are defined as a direction x and a direction y, where the direction x and the direction y are perpendicular to each other.

The first side surface 24 includes the first truncated cone section 21 and the second truncated cone section 22. Specifically, the first side surface 24 includes a first region 241 and a second region 242, where the first region 241 is adjacent to the first end surface 25 in the direction z, and the first region 241 is a side surface of the first truncated cone section 21; and the second region 242 is adjacent to the first region 241 in the direction z, and the second region 242 is a side surface of the second truncated cone section 22. Based on this, a first section 41 covers a portion of the second region 242, a second section 42 covers a portion of the second region 242, and a third section 43 covers a portion of the first region 241.

In addition, as shown in FIG. 3, the second truncated cone section 22 further includes a third side surface 221 opposite the second region 242 in the direction x, and a first bottom surface 222 located between the second region 242 and the third side surface 221 and connecting the second region 242 and the third side surface 221.

In these embodiments of this application, as shown in FIG. 2, the first truncated cone section 21 is connected to the second truncated cone section 22, and observed along the direction z, a radius of a bottom end surface of the first truncated cone section 21 is different from a radius of a bottom end surface of the second truncated cone section 22.

In these embodiments of this application, as shown in FIG. 2 and FIG. 3, the second housing 3 may be roughly cylindrical, and the second housing 3 is hollow, so the first housing 2 and the second housing 3 can be connected to jointly form the accommodating space 20. Specifically, as shown in FIG. 2, the second housing 3 also has an arc-shaped second side surface 31 and a second end surface 32 connected to the second side surface 31. The second end surface 32 is perpendicular to the direction z, and the second end surface 32 is parallel to the first end surface 25. There is a parallel tolerance between the second end surface 32 and the first end surface 25, the value of the parallel tolerance being about -5° to +5°. A side of the second housing 3 opposite the second end surface 32 has a second opening, and the first opening of the first housing 2 is disposed opposite and connected to the second opening of the second housing 3. The second housing 3 includes a third cylindrical section 33 and a limiting section 34 connected. A side wall of the limiting section 34 is oblique in the direction z. The second truncated cone section 22 of the first housing 2 is disposed in the second housing 3, and the side surface of the first truncated cone section 21 and the limiting section 34 of the second housing 3 fit to connect the first housing 2 and the second housing 3. Further, as shown in FIG. 3, a side of the limiting section 34 facing away from the third cylindrical section 33 is oblique toward the inside of the second housing 3 in the direction x.

As shown in FIG. 2 and FIG. 3, the second side surface 31 may include a third region 311 and a fourth region 312, where the third region 311 is adjacent to the second bottom surface 32 in the direction z and serves as a side surface of the third cylindrical section 33, and the fourth region 312 is adjacent to the third region 311 in the direction z and serves as a side surface of the limiting section 34.

Further, materials of the first housing 2 and the second housing 3 may be metals such as copper, aluminum, silver, or nickel, or the materials of the first housing 2 and the second housing 3 may be plastic or rubber, which are not limited in this application.

In these embodiments of this application, the first adhesive layer 4 is disposed between the first housing 2 and the second housing 3. The first adhesive layer 4 includes a first section 41, a second section 42, and a third section 43 connected in sequence, a boundary point between the first section 41 and the second section 42 is at a position from the bottom of the first adhesive layer 4 to a distance of 1/4H from a second end surface 32 of the battery 10, where H is a distance between a first end surface 25 and the second end surface 32 of the battery 10, and a boundary point between the second section 42 and the third section 43 is at a position at which an end of the second housing 3 close to the first end surface 25 is located. Thickness of the first section 41, thickness of the second section 42, and thickness of the third section 43 are all different.

Specifically, the first section 41 of the first adhesive layer 4 is located between the second truncated cone section 22 and the second housing 3, and the first section 41 covers a portion of the side surface of the second truncated cone section 22. The first section 41 can be used to connect the second truncated cone section 22 and the second housing 3. Further, in the direction x or direction y in FIG. 2, the first section 41 can fill a portion of the gap between the second truncated cone section 22 and the second housing 3. The second section 42 can be entirely oblique in the direction z to match shape of the limiting section 34 and fit with the first housing 2 and the second housing 3. The third section 43 extends out of the second housing 3 and is attached to the side surface of the first truncated cone section 21, and the third section 43 is used to enhance sealing performance of the joint between the first housing 2 and the second housing 3.

In some embodiments, as shown in FIG. 3, the third section 43 is also located between the first housing 2 and the second housing 3 in the direction x and extends out of the second housing 3 in the direction x, and covers a portion of the limiting section 34 of the second housing 3. The third section 43 covers a portion of the fourth region 312 to enhance the sealing performance between the first housing 2 and the second housing 3 and stability of the connection of the third section 43 with the first housing 2 and the second housing 3.

According to the battery provided in these embodiments of this application, the first adhesive layer 4 is disposed between the first housing 2 and the second housing 3 to reduce the probability of electrical connection between the first housing 2 and the second housing 3. The second truncated cone section 22 of the first housing 2 is disposed in the second housing 3 to relatively fix the first housing 2 and the second housing 3. The first adhesive layer 4 is attached to the third bottom surface 222 of the second truncated cone section 22, and a portion thereof is attached to the third side surface 221 of the second truncated cone section 22. The third side surface 221 is a surface of the second truncated cone section 22 opposite the electrode assembly 1 in the direction x.

Specifically, the first adhesive layer 4 includes the first section 41, the second section 42, and the third section 43, and the first section 41, the second section 42, and the third section 43 are disposed at different joints between the first housing 2 and the second housing 3 respectively. The thicknesses of the first section 41, the second section 42, and the third section 43 are not equal, allowing shape of the first adhesive layer 4 to better fit with shape of a side surface of the first housing 2. Therefore, the first adhesive layer 4 can fill the gap between the first housing 2 and the second housing 3 as much as possible, which can reduce the probability of external moisture and the like penetrating the accommodating space to cause damage to the electrode assembly 1, thereby enhancing sealing performance of the battery 10 and in turn improving service life and product performance of the battery 10.

In addition, observed along the direction z, a distance between the first truncated cone section 21 and the second housing 3 and a second distance between the second truncated cone section 22 and the second housing 3 are not equal, so that the first housing and the second housing meet specific rigidity requirements, which facilitates the connection and fixing of the first housing and the second housing. Correspondingly, the thicknesses of the first section 41, the second section 42, and the third section 43 are also not equal, allowing the sections of the first adhesive layer to fit with the different distances between the first housing and the second housing.

In some embodiments, as shown in FIG. 2 and FIG. 3, a radius of a bottom end surface of the second truncated cone section 22 is R1, a radius of the second housing 3 is R2, a wall thickness of the second truncated cone section 22 in a radial direction of the first truncated cone section 21 is T1, the second housing 3 is cylindrical, the thickness of the first section 41 is T2, the thickness of the second section 42 is T3, and the thickness of the third section 43 is T4, where T3 > (T2 + T4)/2 and T4 ≥ (R2 - R1 - T1). In this application, T3 may be thickness of the thickest portion of the second section 42, and T4 may be thickness of the thickest portion of the third section 43. Further, as shown in FIG. 3, a distance between an edge of the second housing 3 closest to the first truncated cone section 21 of the first housing 2 and a side wall of the first truncated cone section 21 is T, and specifically, a distance between an edge of the limiting section 34 closest to the first side surface 24 and the first side surface is T, where T < T4.

In these embodiments of this application, the wall thickness T1 of the second truncated cone section 22 is thickness of a side wall of the second truncated cone section 22. The thickness T3 of the second section 42 is greater than an average of the thickness T2 of the first section 41 and the thickness T3 of the second section 42, meaning that the second section 42 is thicker. Because the position of the second section 42 is the main stress-bearing position between the first housing 2 and the second housing 3 after the first housing 2 and the second housing 3 are connected, increasing the thickness of the second section 42 can reduce deformation rate of the second section 42, further enhancing the sealing performance of the joint between the first housing 2 and the second housing 3, thereby further enhancing the sealing performance of the battery and the product performance of the battery.

In addition, the thickness T4 of the third section 43 is greater than or equal to a difference between the radius R2 of the second housing 3 and the radius R1 of the second truncated cone section 22, minus the wall thickness T1 of the second truncated cone section 22, meaning that the third section 43 extends out of the second housing 3 and is attached to the side surface of the first truncated cone section 21. The third section 43 is used to enhance the sealing performance of the joint between the first housing 2 and the second housing 3, thereby further enhancing the sealing performance of the battery and the product performance of the battery.

In some embodiments, as shown in FIG. 3, the first adhesive layer further includes a fourth section 44, the fourth section 44 enclosing an edge of the second truncated cone section 22 and extending into the accommodating space.

In these embodiments of this application, as shown in FIG. 3, one side of the fourth section 44 is connected to the first section 41, and at least a portion of another side thereof encloses a bottom edge of the second truncated cone section 22 and extends into the accommodating space. Specifically, the fourth section 44 is attached to the first bottom surface 222 of the second truncated cone section 22 and attached to a portion of the third side surface 221. Therefore, the fourth section 44 may partially or fully fill the gap between the bottom edge of the second truncated cone section 22 and the second end surface 32 of the first housing 2 in the direction z. The fourth section 44 can be used to connect the bottom edge of the second truncated cone section 22 and the second housing 3, and the fourth section 44 can be further used to enhance sealing performance between the second truncated cone section 22 and the fourth section 44, reducing the probability of impurities such as water and oxygen entering the accommodating space via the foregoing gap, thereby enhancing the sealing performance of the battery and the product performance of the battery. In addition, the fourth section is located between the second truncated cone section of the first housing and the bottom surface of the second housing in the direction z, which can insulate the first housing from the second housing, reducing the probability of short circuit of the battery caused by electrical connection between the first housing and the second housing.

In some embodiments, as shown in FIG. 3, the fourth section 44 is in contact with a surface of the second housing 3 close to the fourth section 44.

In these embodiments of this application, the fourth section 44 is in contact with an inner side of the second end surface 32 of the third housing 3. In other words, in the direction z in FIG. 2, the fourth section 44 fills the gap between the bottom edge of the second truncated cone section 22 and the second end surface 32, which reduces the probability of impurities such as water and oxygen entering the accommodating space via the gap between the second truncated cone section 22 and the second end surface 32 to cause corrosion to the electrode assembly, further enhancing the sealing performance and product performance of the battery.

In these embodiments of this application, as shown in FIG. 3, the first adhesive layer 4 may be not in contact with a laminated body 11, that is, the fourth section 44 of the first adhesive layer 4 is not in contact with the laminated body 11.

For example, the following further describes the effects of the battery provided in this application with reference to a plurality of comparative examples and examples. Different batteries each were subjected to cycling test and high-temperature and high-humidity storage test. In the cycling test, at room temperature, the battery was charged at a current of 0.2C (rate) and then discharged to a cut-off voltage; and then the battery was charged to a limit voltage at a constant current of 0.2C and a constant voltage and then discharged to a discharge cut-off voltage at a constant current of 0.2C. The capacity was recorded as an initial capacity of the battery. Then, the battery was subjected to 700 charge and discharge cycles at 0.8C/1C, the capacity data of the battery after 700 cycles was recorded, and then the electrode assembly was disassembled for observation. In the high-humidity storage test, at room temperature, the battery was charged to a charge limit voltage at a current of 0.2C and then discharged to a discharge cut-off voltage at a constant current of 0.2C. The capacity was recorded as an initial capacity of the battery. Then, the battery was charged to a limit voltage at a constant current of 0.2C and a constant voltage and then placed in a test chamber at 60 degrees Celsius and 90% humidity for a test period of 14 days. After the test was completed, the battery was discharged to a cut-off voltage at a constant current of 0.2C, and the remaining capacity of the battery was recorded. At room temperature, the battery was charged to a charge limit voltage at a current of 0.2C and then discharged to a discharge cut-off voltage at a constant current of 0.2C. The capacity was recorded as a recovery capacity of the battery. The test results are shown in Table 1.

**Table 1**

| Item | No. | Measures | High-temperature and high-humidity test | | | Cycling test | | |
|---|---|---|---|---|---|---|---|---|
| | | | Initial capacity (mAh) | Remaining capacity (mAh) | Recovery capacity (mAh) | Initial capacity (mAh) | Capacity after cycling (mAh) | Observation of disassembled electrode assembly |
| Example | 1 | The sections of the first adhesive layer have different thicknesses | 60 | 47 | 49 | 60 | 44 | As compared with Comparative Examples 1 and 2, the separator has fewer yellow by-products, which are iron oxides |
| | 2 | The sections of the first adhesive layer have different thicknesses and the bottom edge of the first housing is covered | 60 | 57 | 59 | 60 | 52 | The separator has no obvious substance |
| Comparative Example | 1 | The sections of the first adhesive layer have the same thickness | 60 | 15 | 34 | 60 | 25 | The separator has many yellow by-products, which are iron oxides |
| | 2 | The sections of the first adhesive layer have the same thickness and the bottom edge of the first housing is covered | 60 | 28 | 42 | 60 | 38 | The separator has many yellow by-products, which are iron oxides |

In Table 1, the treatment measure of Comparative Example 1 is to make the first section, the second section, and the third section of the first adhesive layer in the battery have the same thickness, the treatment measure of Comparative Example 2 is to make the first section, the second section, and the third section of the first adhesive layer in the battery have the same thickness and the first adhesive layer have the fourth section enclosing the bottom edge of the first housing, the treatment measure of Example 1 is to make the first section, the second section, and the third section of the first adhesive layer in the battery have different thicknesses, and the treatment measure of Example 2 is to make the first section, the second section, and the third section of the first adhesive layer in the battery have different thicknesses and the first adhesive layer have the fourth section enclosing the bottom edge of the first housing.

It is shown through comparison between Comparative Examples 1 and 2 and Example 1 that in these embodiments of this application, with the first section 41, the second section 42, and the third section 43 of the first adhesive layer 4 having different thicknesses, the electrode assembly 1 generates fewer metal oxides in the battery 10, and the electrode assembly 1 experiences weaker oxidation degree, allowing the battery 10 to have better sealing performance and better product performance. In addition, after the high-temperature and high-humidity test, the recovery capacity and remaining capacity of the battery 10 significantly increase, indicating better product performance.

It is shown through comparison between Comparative Examples 1 and 2 and Example 2 that in these embodiments of this application, with the first section 41, the second section 42, and the third section 43 of the first adhesive layer 4 having different thicknesses and the fourth section 44 of the first adhesive layer 4 enclosing the bottom edge of the first housing 2, the electrode assembly 1 has no oxides, and the electrode assembly 1 experiences no oxidation, allowing the battery 10 to have excellent sealing performance. In addition, after the high-temperature and high-humidity test, the recovery capacity and remaining capacity of the battery 10 significantly increase, indicating better product performance.

It is shown through comparison between Example 1 and Example 2 that with the fourth section 44 of the first adhesive layer 4 enclosing the bottom edge of the first housing 2, the separator has no obvious substances, which indicates that the electrode assembly does not experience significant oxidation, and further increases the recovery capacity and remaining capacity of the battery 10, further enhancing the sealing performance and product performance of the battery 10.

In some embodiments, as shown in FIG. 2, the radius R1 of the bottom end surface of the second truncated cone section 22 is greater than a radius R3 of the bottom end surface of the first truncated cone section 21.

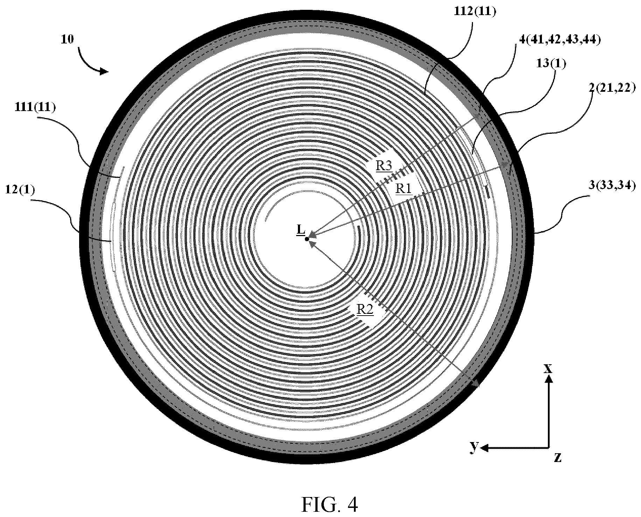

In these embodiments of this application, as shown in FIG. 2 and FIG. 4, FIG. 4 is a schematic diagram of the battery in FIG. 2 observed from the second end surface to the first end surface along the direction z. In FIG. 2 and FIG. 4, L is an axis of the first truncated cone section 21 and the second truncated cone section 22, and may also be a center line of the first truncated cone section 21 and the second truncated cone section 22 in the direction z. The radius of the bottom end surface of the second truncated cone section 22 is R1, the radius of the bottom end surface of the first truncated cone section 21 is R3, and the radius of the second housing 3 is R2, where R1 is greater than R3, and the second truncated cone section 22 is disposed in the second housing 3. Because R1 is greater than R3, when the second truncated cone section 22 is disposed in the second housing 3, the second truncated cone section 22 can limit the overall first housing 2, limiting a distance of upward movement of the first housing 2 along the direction z, and reducing the probability of the first housing 2 moving upward and detaching from the second housing 3, thereby improving the stability of the connection between the first housing 2 and the second housing 3.

In some embodiments, in a radial direction of the first truncated cone section, thickness of the first section falls within a range of 0.08 mm to 0.2 mm. In other words, in the direction x in FIG. 2, the thickness of the first section falls within the range of 0.08 mm to 0.2 mm.

In these embodiments of this application, the thicknesses of the first section 41, the second section 42, and the third section 43 are not equal, allowing the shape of the first adhesive layer 4 to better fit with the shape of the side surface of the first housing 2. Therefore, the first adhesive layer 4 can fill the gap between the first housing 2 and the second housing 3 as much as possible, which can reduce the probability of external moisture and the like penetrating the accommodating space to cause damage to the electrode assembly 1, thereby enhancing the sealing performance of the battery 10 and in turn improving the service life and product performance of the battery 10.

In some embodiments, in a radial direction of the first truncated cone section 21 (the direction x in FIG. 2), a radius of the second truncated cone section 22 falls within a range of 4.6 mm to 7 mm; and a radius of the first truncated cone section 21 falls within a range of 4.3 mm to 6.5 mm.

In some embodiments, in a radial direction of the first truncated cone section 21 (the direction x in FIG. 2), a difference between a distance from the first truncated cone section 21 to the second housing and a distance from the second truncated cone section 22 to the second housing falls within a range of 0.2 mm to 0.5 mm.

In some embodiments, in an axial direction of the first truncated cone section 21 (the direction z in FIG. 2), a height difference between the first truncated cone section 21 and the second truncated cone section 22 falls within a range of 3 mm to 4 mm.

In some embodiments, in an axial direction of the first truncated cone section 21 (the direction z in FIG. 2), a length difference between the third section and the first section falls within a range of 2 mm to 4 mm.

In some embodiments, the first adhesive layer 4 covers all surfaces of the first housing 2 and the second housing 3 in contact. Thus, the stability of the connection between the first housing 2 and the second housing 3 can be further improved, and the sealing performance between the first housing 2 and the second housing 3 is further enhanced, thereby further enhancing the sealing performance and product performance of the battery 10. Further, the first adhesive layer 4 can fill all the gaps between the first housing 2 and the second housing 3, to further enhance the sealing performance and product performance of the battery 10.

Specifically, the following describes the effects of these embodiments of this application with reference to a plurality of examples and comparative examples. Different batteries each were subjected to cycling test and high-temperature and high-humidity storage test. In the cycling test, at room temperature, the battery was charged at a current of 0.2C and then discharged to a cut-off voltage; and then the battery was charged to a limit voltage at a constant current of 0.2C and a constant voltage and then discharged to a discharge cut-off voltage at a constant current of 0.2C. The capacity was recorded as an initial capacity of the battery. Then, the battery was subjected to 700 charge and discharge cycles at 0.8C/1C, the capacity data of the battery after 700 cycles was recorded, and then the electrode assembly was disassembled for observation. In the high-humidity storage test, at room temperature, the battery was charged to a charge limit voltage at a current of 0.2C and then discharged to a discharge cut-off voltage at a constant current of 0.2C. The capacity was recorded as an initial capacity of the battery. Then, the battery was charged to a limit voltage at a constant current of 0.2C and a constant voltage and then placed in a test chamber at 60 degrees Celsius and 90% humidity for a test period of 14 days. After the test was completed, the battery was discharged to a cut-off voltage at a constant current of 0.2C, and the remaining capacity of the battery was recorded. At room temperature, the battery was charged to a charge limit voltage at a current of 0.2C and then discharged to a discharge cut-off voltage at a constant current of 0.2C. The capacity was recorded as a recovery capacity of the battery. The test results are shown in Table 2.

**Table 2**

| Item | No. | Size relation | | | | | | | | High-temperature and high-humidity test | | | Cycling test | | |
|---|---|---|---|---|---|---|---|---|---|---|---|---|---|---|---|
| | | T3 > (T2 +T4)/2 (1) | | | | T4 ≥ (R2 - R1 - T1) (2) | | | | Initial capacity (mAh) | Remaining capacity (mAh) | Recovery capacity (mAh) | Initial capacity (mAh) | Capacity after cycling (mAh) | Observation of disassembled electrode assembly |
| | | T2 | T4 | (T2 + T4)/2 | T3 | T4 | R2 | R1 | T1 | | | | | | |
| Example | 3 | 0.075 | 0.166 | 0.121 | 0.124 | 0.166 | 4.48 | 4.21 | 0.155 | 60 | 49 | 56 | 60 | 52 | The separator has no obvious substance |
| | 4 | 0.101 | 0.150 | 0.126 | 0.133 | 0.150 | 5.56 | 5.27 | 0.164 | 60 | 50 | 58 | 60 | 54 | The separator has no obvious substance |
| | 5 | 0.054 | 0.190 | 0.122 | 0.136 | 0.190 | 6.29 | 5.97 | 0.149 | 60 | 50 | 58 | 60 | 54 | The separator has no obvious substance |
| | 6 | 0.082 | 0.147 | 0.115 | 0.131 | 0.147 | 5.11 | 4.83 | 0.147 | 60 | 52 | 59 | 60 | 55 | The separator has no obvious substance |
| Comparative Example | 3 | 0.119 | 0.153 | 0.136 | 0.144 | 0.153 | 5.55 | 5.22 | 0.160 | 60 | 33 | 40 | 60 | 42 | The separator has many |

| Item | No. | Size relation | | | | | | | | High-temperature and high-humidity test | | | Cycling test | | |
|---|---|---|---|---|---|---|---|---|---|---|---|---|---|---|---|
| | | T3 > (T2 +T4)/2 (1) | | | | T4 ≥ (R2 - R1 - T1) (2) | | | | Initial capacity (mAh) | Remaining capacity (mAh) | Recovery capacity (mAh) | Initial capacity (mAh) | Capacity after cycling (mAh) | Observation of disassembled electrode assembly |
| | | T2 | T4 | (T2 + T4)/2 | T3 | T4 | R2 | R1 | T1 | | | | | | |
| | | | | | | | | | | | | | | | yellow by-products, which are iron oxides |
| | 4 | 0.107 | 0.201 | 0.154 | 0.146 | 0.201 | 5.56 | 5.27 | 0.164 | 60 | 41 | 49 | 60 | 37 | The separator has many yellow by-products, which are iron oxides |
| | 5 | 0.087 | 0.130 | 0.109 | 0.096 | 0.130 | 5.55 | 5.22 | 0.160 | 60 | 25 | 30 | 60 | 28 | The separator has many yellow by-products, which are iron oxides |

In Table 2, in the battery provided in Comparative Example 3, the size relation of T1, T3, and T2 meets the foregoing relation (1), and the size relation of T4, R2, R1, and T1 does not meet the foregoing relation (2); in the battery provided in Comparative Example 4, the size relation of T1, T3, and T2 does not meet the foregoing relation (1), and the size relation of T4, R2, R1, and T1 meets the foregoing relation (2); and in the battery provided in Comparative Example 5, the size relation of T1, T3, and T2 does not meet the foregoing relation (1), and the size relation of T4, R2, R1, and T1 does not meet the foregoing relation (2).

It is shown through comparison between Comparative Example 3 and Examples 3 to 6 that in these embodiments of this application, when the size relation of T4, R2, R1, and T1 meets the foregoing relation (2), the remaining capacity and the recovery capacity of the battery after the high-temperature and high-humidity test are higher, and the capacity after cycling of the battery after the cycling test is also higher. In addition, after the electrode assembly is disassembled for observation, the separators of the batteries in Examples 3 to 6 have no obvious substance, while the separator of the battery in Comparative Example 3 has many iron oxides, meaning that when the size relation of T4, R2, R1, and T1 meets the foregoing relation (2), the sealing performance and product performance of the battery are significantly enhanced.

It is shown through comparison between Comparative Example 3 and Examples 3 to 6 that in these embodiments of this application, when the size relation of T1, T3, and T2 meets the foregoing relation (1), the remaining capacity and the recovery capacity of the battery after the high-temperature and high-humidity test are higher, and the capacity after cycling of the battery after the cycling test is also higher. In addition, after the electrode assembly is disassembled for observation, the separators of the batteries in Examples 3 to 6 have no obvious substance, while the separator of the battery in Comparative Example 3 has many iron oxides, meaning that when the size relation of T1, T3, and T2 meets the foregoing relation (1), the sealing performance and product performance of the battery are significantly enhanced.

It is shown through comparison between Comparative Example 5 and Examples 3 to 6 that in these embodiments of this application, when the size relation of T1, T3, and T2 meets the foregoing relation (1) and the size relation of T4, R2, R1, and T1 meets the foregoing relation (2), the remaining capacity and the recovery capacity of the battery after the high-temperature and high-humidity test are higher, and the capacity after cycling of the battery after the cycling test is also higher. In addition, after the electrode assembly is disassembled for observation, the separators of the batteries in Examples 3 to 6 have no obvious substance, while the separator of the battery in Comparative Example 3 has many iron oxides, meaning that when the size relation of T1, T3, and T2 meets the foregoing relation (1) and the size relation of T4, R2, R1, and T1 meets the foregoing relation (2), the sealing performance and product performance of the battery are further enhanced.

In some embodiments, the first housing 2 and the second housing 3 are connected by snap-fitting. Specifically, protruding snap-fit portions or a protruding claw portion and a recess structure may be disposed on the first housing 2 and the second housing 3 respectively, so that the first housing 2 and the second housing 3 are connected by snap-fitting, providing stable connection and simple operation.

In some embodiments, the first housing 2 and the second housing 3 are connected by interlocking. As shown in FIG. 2, a diameter of the bottom end surface of the second truncated cone section 22 can be greater than a diameter of the bottom end surface of the first truncated cone section 21. The second truncated cone section 22 is pressed downward into the second housing 3, and then the second truncated cone section 22 is limited by the limiting section on the second housing 3, so as to connect the first housing 2 and the second housing 3 by interlocking. The first housing 2 and the second housing 3 are directly connected by interlocking, with no need to add an intermediate component between the first housing 2 and the second housing 3, further reducing complexity of the connection between the first housing 2 and the second housing 3.

In some embodiments, the first housing 2 and the second housing 3 are connected by screwing. Specifically, threads may be disposed on a side of the first housing 2 in contact with the first adhesive layer 4, and threads may also be disposed on a side of the first adhesive layer 4 in contact with the first housing 2. Alternatively, threads are disposed on a side of the second housing 3 in contact with the first adhesive layer 4, and threads are also disposed on a side of the first adhesive layer 4 in contact with the second housing 3, so as to connect the first housing 2 and the second housing 3 by screwing through the cooperation of the threads, providing simple connection process and strong connection stability.

In some embodiments, as shown in FIG. 1 and FIG. 2, the electrode assembly 1 includes a laminated body 11, the laminated body 11 includes a first conductive layer 111, a second conductive layer 112, and a separator layer 113 disposed between the first conductive layer 111 and the second conductive layer 112, and the electrode assembly 1 further includes a first tab 12 and a second tab 13, the first tab 12 being connected to the first conductive layer 111, and the second tab 13 being connected to the second conductive layer 112.

In these embodiments of this application, the first conductive layer 111 and the second conductive layer 112 may be a positive electrode conductive layer or a negative electrode conductive layer, and the first conductive layer 111 and the second conductive layer 112 have opposite polarities. In other words, the first conductive layer 111 may be a positive electrode conductive layer or a negative electrode conductive layer; and the second conductive layer 112 may be a positive electrode conductive layer or a negative electrode conductive layer, which are not limited in this application. The separator layer 113 is disposed between the first conductive layer 111 and the second conductive layer 112, that is, the separator layer 113 is disposed between positive and negative electrodes of the electrode assembly 1. The separator layer 113 can be used to isolate the positive and negative electrodes for electronic insulation, and the separator layer 113 can also be used to ensure that ions in an electrolyte pass through freely to form an electric circuit.

The first tab 12 and the second tab 13 are metal conductors that lead the positive and negative electrodes out of the laminated body 11, which come into contact with the positive and negative electrodes of the battery 10 to charge and discharge the battery 10. The first tab 12 and the second tab 13 each are a positive electrode tab or a negative electrode tab, and the first tab 12 and the second tab 13 have opposite polarities. When the first tab 12 is a positive electrode tab, the second tab 13 is a negative electrode tab, the first tab 12 is connected to a positive electrode conductive layer, and the second tab 13 is connected to a negative electrode conductive layer, meaning that the first conductive layer 111 is the positive electrode conductive layer, and the second conductive layer 112 is the negative electrode conductive layer. When the first tab 12 is a negative electrode tab, the second tab 13 is a positive electrode tab, the first tab 12 is connected to a negative electrode conductive layer, and the second tab 13 is connected to a positive electrode conductive layer, meaning that the first conductive layer 111 is the negative electrode conductive layer, and the second conductive layer 112 is the positive electrode conductive layer. Materials of the first tab 12 and the second tab 13 are not particularly limited in this application, provided that the objectives of this application can be achieved. For example, the material of the positive electrode tab includes at least one of aluminum (Al) or aluminum alloy, and the material of the negative electrode tab includes at least one of nickel (Ni), copper (Cu), or nickel-plated copper (Ni-Cu).

In addition, the connection manner of the first tab 12 and the second tab 13 with the first conductive layer 111 and the second conductive layer 112 is not particularly limited in this application, provided that the objectives of this application can be achieved. For example, the connection manner may be at least one of laser welding, ultrasonic welding, resistance welding, or adhering through conductive adhesive. The leading-out directions of different tabs are not particularly limited in this application, provided that the objectives of this application can be achieved. For example, the leading-out directions of the first tab 12 and the second tab 13 may be the same or different.

In some embodiments, the first housing 2 and the second housing 3 are connected to the first tab 12 and the second tab 13 respectively, or the first housing 2 and the second housing 3 are connected to conductors connected to the first tab 12 and the second tab 13 respectively. The first tab 12 and the second tab 13 may be electrically connected to the positive and negative electrodes of the battery 10 via the first housing 2 and the second housing 3 respectively to charge and discharge the battery 10. The first tab 12 and the second tab 13 may alternatively be indirectly electrically connected to the positive and negative electrodes of the battery 10 via the conductors on the first housing 2 and the second housing 3 to charge and discharge the battery 10. In addition, the first tab 12 and the second tab 13 being in direct contact and connection with the first housing 2 or the second housing 3 can save the internal accommodating space of the battery 10, reducing volume of the battery 10.

In some embodiments, as shown in FIG. 4, a structure of the laminated body 11 is an axial winding structure. Specifically, the first conductive layer 111, the second conductive layer 112, and the separator layer 113 in the laminated body 11 are wound together around an axis C to form the axial winding structure.

In some embodiments, a structure of the laminated body 11 is a laminated structure in a first direction or a laminated structure in a second direction, the first direction being perpendicular to the second direction. Specifically, the first conductive layer 111, the separator layer 113, and the second conductive layer 112 in the laminated body 11 are stacked sequentially in the first direction or the second direction to form the laminated body. The first direction and the second direction are directions perpendicular to each other in the same plane, and the first direction and the second direction are both perpendicular to the axial direction of the first truncated cone section 21.

In some embodiments, a material of the first adhesive layer 4 is a polymer, and the polymer is at least one of rubber, plastic, or resin.

Some embodiments of a second aspect of this application provide an electric device, where the electric device includes the battery 10 according to these embodiments of the first aspect.

The electric device provided in some embodiments of this application includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

In these embodiments of this application, the battery 10 is configured to provide electrical energy for the electric device. In the battery of the electric device provided in these embodiments of this application, the first adhesive layer 4 is disposed between the first housing 2 and the second housing 3 to reduce the probability of electrical connection between the first housing 2 and the second housing 3. The second truncated cone section 22 of the first housing 2 is disposed in the second housing 3 to relatively fix the first housing 2 and the second housing 3. The first adhesive layer 4 includes the first section 41, the second section 42, and the third section 43, and the first section 41, the second section 42, and the third section 43 are disposed at different joints between the first housing 2 and the second housing 3 respectively. The thicknesses of the first section 41, the second section 42, and the third section 43 are not equal, allowing the shape of the first adhesive layer 4 to better fit with the shape of the side surface of the first housing 2. Therefore, the first adhesive layer 4 can fill the gap between the first housing 2 and the second housing 3 as much as possible, which can reduce the probability of external moisture and the like penetrating the accommodating space to cause damage to the electrode assembly 1, thereby enhancing the sealing performance of the battery 10 and in turn improving the service life and product performance of the battery 10.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A battery, wherein the battery comprises:
an electrode assembly;
a first housing and a second housing, wherein the first housing is connected to the second housing, an accommodating space is formed between the first housing and the second housing, the electrode assembly is disposed in the accommodating space, the first housing comprises a first truncated cone section and a second truncated cone section, and the second truncated cone section is disposed in the second housing; and
a first adhesive layer, wherein the first adhesive layer is located between the first housing and the second housing; the first adhesive layer comprises a first section, a second section, and a third section connected in sequence; a boundary point between the first section and the second section is at a position from a bottom of the first adhesive layer to a distance of 1/4H from a second end surface of the battery, wherein H is a distance between a first end surface and the second end surface of the battery, and a boundary point between the second section and the third section is at a position at which an end of the second housing close to the first end surface is located; wherein
a thickness of the first section, a thickness of the second section, and a thickness of the third section are all different.

2. The battery according to claim 1, wherein a radius of a bottom end surface of the second truncated cone section is R1, a radius of the second housing is R2, a wall thickness of the second truncated cone section in a radial direction of the first truncated cone section is T1, the second housing is cylindrical, the thickness of the first section is T2, the thickness of the second section is T3, and the thickness of the third section is T4, wherein T3 > (T2 + T4)/2 and T4 ≥ (R2 - R1 - T1).

3. The battery according to claim 1, wherein the first adhesive layer further comprises a fourth section, at least a portion of the fourth section enclosing an edge of the second truncated cone section and extending into the accommodating space.

4. The battery according to claim 3, wherein the fourth section is in contact with an inner bottom surface of the second housing.

5. The battery according to any one of claims 1 to 4, wherein in a radial direction of the first truncated cone section, the thickness of the first section falls within a range of 0.08 mm to 0.2 mm.

6. The battery according to any one of claims 1 to 4, wherein in a radial direction of the first truncated cone section, a radius of the second truncated cone section falls within a range of 4.6 mm to 7 mm; and
a radius of the first truncated cone section falls within a range of 4.3 mm to 6.5 mm.

7. The battery according to any one of claims 1 to 4, wherein in a radial direction of the first truncated cone section, a difference between a distance from the first truncated cone section to the second housing and a distance from the second truncated cone section to the second housing falls within a range of 0.2 mm to 0.5 mm.

8. The battery according to any one of claims 1 to 4, wherein in an axial direction of the first truncated cone section, a height difference between the first truncated cone section and the second truncated cone section falls within a range of 3 mm to 4 mm.

9. The battery according to any one of claims 1 to 4, wherein in an axial direction of the first truncated cone section, a length difference between the third section and the first section falls within a range of 2 mm to 4 mm.

10. The battery according to claim 1, wherein the first adhesive layer covers all surfaces of the first housing and the second housing in contact.

11. The battery according to claim 1, wherein the first housing and the second housing are connected by snap-fitting, or the first housing and the second housing are connected by interlocking, or the first housing and the second housing are connected by screwing.

12. The battery according to claim 1, wherein the electrode assembly comprises a laminated body; the laminated body comprises a first conductive layer, a second conductive layer, and a separator layer disposed between the first conductive layer and the second conductive layer; and the electrode assembly further comprises a first tab and a second tab, the first tab being connected to the first conductive layer, and the second tab being connected to the second conductive layer.

13. The battery according to claim 12, wherein the first housing and the second housing are connected to the first tab and the second tab respectively, or
the first housing and the second housing are connected to conductors connected to the first tab and the second tab respectively.

14. The battery according to claim 12, wherein a structure of the laminated body is an axial winding structure.

15. The battery according to claim 12, wherein a structure of the laminated body is a laminated structure in a first direction or a laminated structure in a second direction, the first direction being perpendicular to the second direction.

16. The battery according to claim 1, wherein a material of the first adhesive layer is a polymer, and the polymer is at least one of rubber, plastic, or resin. 17. An electric device, wherein the electric device comprises the battery according to any one of claims 1 to 16.
